# EUROPÄISCHE PATENTANMELDUNG

(11) **EP 3 098 916 A1**
(43) Veröffentlichungstag der Anmeldung: **30.11.2016**
(21) Anmeldenummer: 16171576.8
(22) Anmeldetag: 26.05.2016
(51) Int. Cl.: H02G 1/10

(54) **VORRICHTUNG ZUM EINBRINGEN EINES OBJEKTES, INSBESONDERE EINES KABELS, IN EINEN GEWÄSSERGRUND**

(30) Priorität: 27.05.2015 DE 202015102743 U
(71) Anmelder: Bohlen & Doyen GmbH, 26639 Wiesmoor (DE)
(72) Erfinder: Glombek, Stefan, 26131 Oldenburg (DE)
(74) Vertreter: Eisenführ Speiser

(57) **Zusammenfassung**

Die Erfindung betrifft eine Vorrichtung (1) und einen Hydraulikbagger (4) zum Einbringen eines Objektes (38), insbesondere Kabels in einen Gewässergrund, mit einem Rohr (2), insbesondere Spül- und Saugrohr, welches mit einer Pumpe (42) verbindbar ist, so dass in dem Rohr (2) ein Fluidstrom zum Auflockern des Gewässergrunds erzeugbar ist. Erfindungsgemäß ist eine mit einem Hydraulikbagger (4) lösbar verbindbare Kopplungseinrichtung (6) zum unmittelbaren oder mittelbaren Koppeln des Rohres (2) mit einem Hydraulikbagger (4).

## Beschreibung

Die vorliegende Erfindung betrifft eine Vorrichtung zum Einbringen eines Objektes, insbesondere eines Kabels in einen Grund eines Gewässers, mit einem Spül- oder SaugRohr, welches so mit einer Pumpe verbindbar ist, dass in dem Rohr ein Fluidstrom, insbesondere Flüssigkeitsstrom zum Auflockern des Gewässergrunds erzeugbar ist.

Derartige Vorrichtungen werden vorwiegend eingesetzt, um Objekte, wie (See-)Kabel, Rohrleitungen oder dergleichen in Gewässerböden (See- oder Meeresböden) einzubringen oder solche Objekte freizulegen. Beispielsweise kann eine solche Vorrichtung an Bord eines Schiffes, eines Pontons oder dergleichen eingesetzt werden, um elektrische Kabel von Windenergieanlagen anzuschließen und in den oberflächennahen Bereich eines Gewässergrundes einzuspülen. Auch bei nachträglichen Reparaturarbeiten können solche Vorrichtungen eingesetzt werden, beispielsweise um defekte Kabel und Kabelverbindungen oder Muffen freizuspülen und nach einer Reparatur und einem Wiederanschluss in den Meeresgrund einzuspülen.

Bei einer bekannten Vorrichtung ist das Spül- oder Saugrohr mittels eines Schlauchs mit einer Druck- oder Saugpumpe verbunden. Im Falle eines Spülrohres verjüngt sich der Rohrquerschnitt am Ende düsenförmig. Das Rohr kann beispielsweise als sogenannte Doppellanze ausgebildet und am Ende Y-förmig gegabelt oder verzweigt sein, sodass zwei Wasserstrahlen zum Spülen und Auflockern des Gewässergrundes abgegeben werden können. Das Rohr ist mit einem Haken versehen und hängt an einer Kette eines Krans. Mithilfe des auf dem Schiff befindlichen Krans kann das Rohr relativ zu dem Objekt, z.B. entlang des Objektes bewegt werden. Durch Zugabe von Wasser oder Absaugen von Boden neben dem Objekt wird eine Art Graben erzeugt, in den das Objekt hineinrutschen kann. Diese Arbeiten werden in der Regel mit einem Taucher ausgeführt. Der Taucher führt das Rohr beim Spülen/Saugen entlang des Objekts. Aufgrund seiner Wahrnehmungen unter Wasser kann er Kommandos an den Kranfahrer zum Steuern der Bewegung des Rohres und zum Einstellen des Mengenstroms des Wassers durch das Rohr geben.

Nachteilig an der bekannten Vorrichtung ist, dass der Einsatz von Tauchern aufgrund der Sicht, Strömungen und mechanischen Gefahren gefährlich ist. Das Rohr lässt sich mithilfe des Krans und der Kette gerade auch bei Strömung oder Wind und Wellengang unzureichend führen. Bei Seegang kann das Rohr auf dem Objekt aufsetzen und dieses beschädigen.

Aufgabe der vorliegenden Erfindung ist es, eine Vorrichtung bereitzustellen, mit der die vorstehenden Nachteile wenigstens teilweise verringert werden. Insbesondere soll eine Vorrichtung bereitgestellt werden, mit deren Hilfe ohne Taucher strangförmige Objekte wie (See-) Kabel, Rohrleitungen oder dergleichen freigespült oder eingespült werden können und/oder bei der das Rohr zuverlässig und sicher geführt und/oder Beschädigungen des Objektes oder der Vorrichtung selbst möglichst verhindert werden können.

Die Erfindung löst die Aufgabe gemäß eines ersten Aspektes bei einer Vorrichtung der eingangs genannten Art durch eine mit einem Hydraulikbagger lösbar verbindbare Kopplungseinrichtung zum unmittelbaren oder mittelbaren Koppeln des Rohres mit einem Hydraulikbagger.

Durch die Kopplungseinrichtung kann die Vorrichtung vorteilhaft mit einem Hydraulikbagger verbunden werden. Ein Hydraulikbagger weist einen bewegbaren Arm auf, sodass das Rohr definiert geführt werden kann. So lässt sich das Rohr während des Spül- oder Saugvorgangs dreidimensional zuverlässig bewegen, um ein Objekt einzubringen, das Rohr in die Nähe des Objektes zu bewegen und dergleichen. Ein Hydraulikbagger lässt sich gut auf einem Schiff oder anderem schwimmfähigen Gerät positionieren. Mittels der Kopplungseinrichtung kann das Rohr entweder direkt unmittelbar an dem Ende des Arms des Hydraulikbaggers, der sogenannten Baggeraufnahme lösbar befestigt werden oder unter Zwischenschaltung anderer Elemente der Vorrichtung, wie etwa einer Führungs- und/oder einer Dämpfungseinrichtung oder einem Rotator, wie nachfolgend weiter erläutert.

Die Erfindung löst die Aufgabe gemäß eines zweiten Aspektes bei einer Vorrichtung der eingangs genannten Art durch einen mit dem Rohr gekoppelten Rotator zum Rotieren des Rohres um dessen Längsachse.

Unter einen Rotator ist jede Art von Vorrichtung zu verstehen, die geeignet ist, mithilfe eines Antriebs und ggf. geeigneter Führungs- oder Lagerungseinrichtung das Rohr zu rotieren um seine Längsachse. So kann das Rohr, welches vorzugsweise im unteren Bereich verzweigt ist, beispielsweise Y-förmig nach Art einer sogenannten Doppellanze, gedreht werden, um die unteren Öffnungen in unterschiedlichen Positionen verdrehen zu können, um sie optimal je nach Anwendungsfall relativ zum Objekt, beispielsweise einem Kabel ausrichten zu können. Beispielsweise kann im Falle einer Doppellanze diese so relativ zu einem strangförmigen Objekt, z.B. einem See-Kabel ausgerichtet werden, dass die verzweigten Rohrenden jeweils seitlich zur Längsachse des Objektes ausgerichtet sind oder alternativ oberhalb der Längsachse angeordnet sind. So lässt sich jeweils die gewünschte Spül- oder Saugwirkung einstellen. In optionaler Kombination mit der Kopplungseinrichtung gemäß des ersten Aspekts und einem Hydraulikbagger lässt sich das Saug- oder Spül-Rohr vielfältig bewegen und ausrichten.

Die Erfindung löst die Aufgabe gemäß eines dritten Aspektes bei einer Vorrichtung der eingangs genannten Art durch eine mit dem Rohr gekoppelte Führungseinrichtung zum Führen des Rohres und Ermöglichen einer axialen Bewegbarkeit des Rohres.

Mittels einer solchen Führungseinrichtung lässt sich das Rohr relativ zu einem anderen Abschnitt der Vorrichtung, insbesondere einer zuvor beschriebenen Aufnahmeeinrichtung abschnittsweise axial verschieben. Insbesondere ist dies vorteilhaft, wenn das Rohr mit seinem unteren Ende auf das Objekt, beispielsweise ein See-Kabel auftrifft, denn so kann sich das Rohr in die Führung axial hinein bewegen, wodurch die Kräfte auf das Objekt verringert werden. Beschädigungen des Objektes können so weitgehend vermieden werden.

Die Erfindung löst die Aufgabe gemäß eines vierten Aspektes bei einer Vorrichtung der eingangs genannten Art durch eine Dämpfungseinrichtung zum Dämpfen einer axialen Bewegung des Rohres.

Eine Dämpfungseinrichtung, Insbesondere auch die Kombination aus einer erfindungsgemäßen Dämpfungseinrichtung mit einer zuvor beschriebenen erfindungsgemäßen Führungseinrichtung, ermöglicht es, Beschädigungen des Objektes durch das Rohr, beispielweise während einer Abwärtsbewegung zu vermeiden. Aber auch eine isolierte Dämpfungseinrichtung verringert etwaige Auftreffkräfte beim Auftreffen des Rohres auf das Objekt.

Die Erfindung löst die Aufgabe gemäß eines fünften Aspektes bei einer Vorrichtung der eingangs genannten Art durch einen mit dem Rohr gekoppelten wenigstens teilweise elastisch verformbaren Kompensator, welcher eine axiale und/oder winklige Bewegung des Rohres ermöglicht.

Mittels eines erfindungsgemäßen Kompensators, welcher in das Rohr abschnittsweise integriert ist und/oder an einem insbesondere oberen Endabschnitt des Rohres befestigt ist, kann sich aufgrund elastischer Elemente des Kompensators das Rohr sowohl winkelig seitlich bewegen oder ausweichen und/oder kann das Rohr innerhalb gewisser Grenzen axial bewegt werden. Diese winklige abknickende Bewegbarkeit bzw. axiale Bewegbarkeit trägt dazu bei, Beschädigungen eines Objektes beispielsweise eines empfindlichen Kabels zu verringern, da bei in Kontakt kommen des Rohres mit dem Objekt aufgrund der Ausweichbewegung Kräfte vergleichsweise gering sind.

Die Erfindung löst die Aufgabe gemäß eines sechsten Aspektes bei einer Vorrichtung der eingangs genannten Art durch eine mit dem Rohr gekoppelte Sensoreinrichtung mit mindestens einem Sensor oder mehreren Sensoren.

Mithilfe einer erfindungsgemäßen Sensoreinrichtung können vor oder während des Betriebs verschiedene Parameter oder Messgrößen erfasst werden. Gleichartige oder verschiedene Sensoren zur Erfassung verschiedener Messgrößen können vorgesehen sein und zur Steuerung der Vorrichtung insbesondere der Bewegung des Rohres relativ zu einem Objekt verwendet werden. Die Sensoren sind mit dem Rohr gekoppelt oder alternativ in der Nähe des Rohres angeordnet. Beispielsweise können die Sensoren geeignet sein folgende Messgrößen zu erfassen: Positionsdaten, GPS-Daten, Magnetfelddaten zur Bestimmung des Abstandes und/oder der Relativstellung des Rohres relativ zu dem Objekt, Bilddaten der Umgebung insbesondere der Lage und Form des Objektes, Wassertiefe, Neigung bzw. Schräglage des Rohres und dergleichen mehr. Die von dem oder den Sensoren bereitgestellten Signale können mittels Datenfernübertragung kabelgebunden oder kabellos zu einer Steuerungseinrichtung und/oder einem Computer mit entsprechender Auswertungssoftware übertragen werden. So können die Daten den Benutzern der Vorrichtung dargestellt werden, um die Vorrichtung zu steuern, beispielsweise dem Führer des Hydraulikbaggers. Die von den Sensoren bereitgestellten Signale können zusammen mit GPS-Daten verarbeitet werden. So können aus den gesamten ermittelten Daten beispielsweise die genauen Ortskoordinaten des Objektes und des Rohres genutzt und verarbeitet werden.

Die obigen Erfindungsaspekte können jeweils einzeln und auch in beliebiger Kombination erfindungsgemäß verwendet werden.

Vorteilhafte Weiterbildungen der Erfindung sind in den Unteransprüchen angegeben.

Vorzugsweise weist die Kopplungseinrichtung einen Flansch auf, welcher mit einer Baggeraufnahme eines Hydraulikbaggers gekoppelt ist und mit dem Rohr mittelbar oder unmittelbar verbunden ist. So lässt sich eine einfache Weise eine sicher lösbare Verbindung herstellen. Vorzugsweise ist der Flansch mit einer zwischengeschalteten Führungseinrichtung verbunden.

Gemäß einer bevorzugten Ausführungsform wird vorgeschlagen, dass die Führungseinrichtung und/oder die Dämpfungseinrichtung ein Führungsrohr mit mindestens einem axial verlaufenden Schlitz, vorzugsweise zwei axial verlaufenden gegenüberliegenden Schlitzen sowie ein koaxial zu dem Führungsrohr angeordnetes weiteres Führungsrohr aufweist, welches mit einem Vorsprung oder vorzugsweise zwei Vorsprüngen versehen ist, der bzw. die in dem mindestens einen Schlitz in dem ersten Führungsrohr axial verschieblich ist bzw. sind. So lässt sich eine konstruktiv einfache Weise eine zuverlässige Führung verwirklichen.

Zweckmäßigerweise weist die Führungseinrichtung mindestens einen, vorzugsweise zwei Hydraulikzylinder auf, der bzw. die im Wesentlichen parallel zur Längsachse des Rohres angeordnet sind. Die Hydraulikzylinder sind gleichzeitig Teil einer erfindungsgemäßen Dämpfungseinrichtung zum Dämpfen einer axialen Bewegung des Rohres. Hierzu kann in den Zylindern ein kompressibles Fluid, beispielsweise ein Gas angeordnet sein, um die Bewegung zu dämpfen.

Gemäß einem alternativen bevorzugten Ausführungsbeispiel wird vorgeschlagen, dass der oder die Hydraulikzylinder hydraulisch mit einem Ausgleichsbehälter, insbesondere einem Blasenspeicher gekoppelt ist / sind, welcher mit einem Gas befüllbar ist. So ist das kompressible Gas beabstandet von der Führungseinrichtung und Dämpfungseinrichtung für das Rohr angeordnet. Vorzugsweise ist der Ausgleichsbehälter an einem Hydraulikbagger angeordnet und mittels mindestens einer mit Hydraulikflüssigkeit gefüllten Leitung mit dem oder den Hydraulikzylindern hydraulisch gekoppelt. Gemäß einer Weiterbildung ist der Ausgleichsbehälter mit einer gas-, insbesondere stickstoffgefüllten Flasche verbunden.

Gemäß einer bevorzugten alternativen Ausführungsform wird vorgeschlagen, dass der Rotator einen hydraulischen Motor, insbesondere einen Axialkolbenmotor aufweist und mittels Hydraulikleitungen mit einem Hydrauliksystem, insbesondere eines Hydraulikbaggers verbindbar ist. Ein solcher Motor lässt sich zweckmäßig und vorteilhaft mit einem Hydrauliksystem eines Hydraulikbaggers verbinden, mit dem das Rohr vorzugsweise in seiner Bewegung gesteuert wird. Zweckmäßigerweise ist der Rotator zwischen Führungseinrichtung und Rohr angeordnet und/oder ist der Rotator mittels Flanschverbindung mit der Führungseinrichtung und/oder dem Rohr verbunden.

Gemäß einer Weiterbildung wird eine Drehwinkel-Messeinrichtung zum Messen des Drehwinkels des Rohres vorgeschlagen. In Verbindung mit dem Rotator lässt sich genau die jeweilige Drehstellung des Rohres, vorzugsweise einer Doppellanze ermitteln.

Eine Weiterbildung der Erfindung schlägt vor, dass die Drehwinkel-Messeinrichtung eine benachbart zu dem Rotator angeordnete Kettenscheibe sowie ein mittels einer Kette oder eines Riemens mit der Kette gekoppeltes Ritzel sowie einen mit dem Ritzel gekoppelten Drehimpulsgeber zum Bereitstellen von Signalen oder Impulsen, die ein Maß für den Drehwinkel des Rohres darstellen, aufweist. Auf diese Weise lässt sich der Drehwinkel konstruktiv einfach und zuverlässig ermitteln.

Die Sensoreinrichtung wird dadurch weitergebildet, dass sie eine mit dem Rohr verbundene Tragvorrichtung zur Befestigung des Sensors oder der Sensoren aufweist. An der Tragvorrichtung können verschiedene und/oder gleichartige Sensoren einfach befestigt werden. Besonders bevorzugt ist es, dass die Tragvorrichtung als ein Gitterrost aus einem nichtmagnetischen Material ausgebildet ist. Insbesondere wenn ein ein Magnetfeld detektierender Sensor zur Erfassung eines von einem Kabel ausgehenden Magnetfeldes verwendet wird, ist es zur Vermeidung von Störungen zweckmäßig, dass die Tragvorrichtung aus einem nicht magnetischen Material ausgebildet ist, vorzugsweise als Gitterrost, um den Sensor an verschiedenen Positionen montieren oder auch einfach mehrere Sensoren anbringen zu können.

Alternativ oder kommutativ weist die Sensoreinrichtung mindestens einen der folgenden Sensortypen auf: Sensor zur Messung eines Magnetfeldes, Kamera, Wasserdruckaufnehmer, GPS-Sensor, Bewegungssensor.

Gemäß einer Weiterbildung der Erfindung wird vorgeschlagen, dass das Rohr an einem oberen Bereich eine Abzweigung zum Einleiten bzw. Abgeben von Flüssigkeit aufweist, dass die Abzweigung mittels eines flexiblen Schlauches mit einer Pumpe verbunden ist, wobei vorzugsweise die Pumpe an dem Hydraulikbagger angeordnet ist und/oder dass zwischen Abzweigung und Schlauch ein Rohrdrehgelenk angeordnet ist. So lässt sich auf einfache Weise ein Spül- oder Saugstrom in dem Rohr verwirklichen.

Gemäß einer bevorzugten Weiterbildung ist die Vorrichtung mittels der Kopplungseinrichtung mit einem Arm eines Hydraulikbaggers gekoppelt.

Die Erfindung löst die Aufgabe ferner gemäß eines weiteren Aspektes mit einem Hydraulikbagger mit den Merkmalen des Anspruchs 26. Hinsichtlich der Vorteile wird auf die obigen und nachfolgenden Beschreibungen Bezug genommen.

Gemäß einer Weiterbildung wird vorgeschlagen, dass das Rohr mittels eines flexiblen Schlauches mit der Pumpe verbunden ist, und/oder der Rotator mit dem Hydrauliksystem gekoppelt sind, und/oder der Ausgleichsbehälter des Dämpfungssystems an dem Hydraulikbagger angeordnet ist und mittels Leitungen mit dem Dämpfungssystem verbunden ist.

Die Erfindung ist nachstehend anhand eines bevorzugten Ausführungsbeispiels unter Bezugnahme auf die Zeichnungen beschrieben. Es zeigen:
- Figur 1:: eine erfindungsgemäße Vorrichtung sowie einen erfindungsgemäßen Hydraulikbagger mit Vorrichtung in einer Seitenansicht;

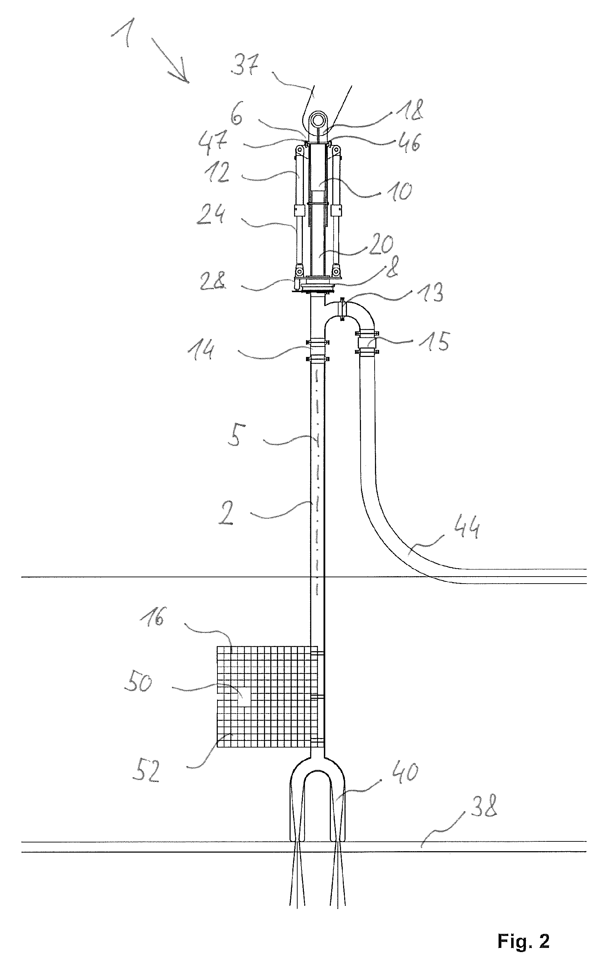

- Figur 2:: die Vorrichtung aus Figur 1 in einer vergrößerten Teildarstellung;
- Figur 3:: die Vorrichtung aus Figur 2 in einer veränderten Betriebsstellung mit abgewinkeltem Rohr;
- Figur 4:: eine Baggeraufnahme und eine Kopplungseinrichtung in einer Seitenansicht;
- Figur 5:: die Kopplungseinrichtung in einer weiteren Seitenansicht;
- Figur 6:: eine Führungseinrichtung und Dämpfungseinrichtung in ausgefahrener Stellung;
- Figur 7:: eine Führungseinrichtung und Dämpfungseinrichtung in eingefahrener Stellung;

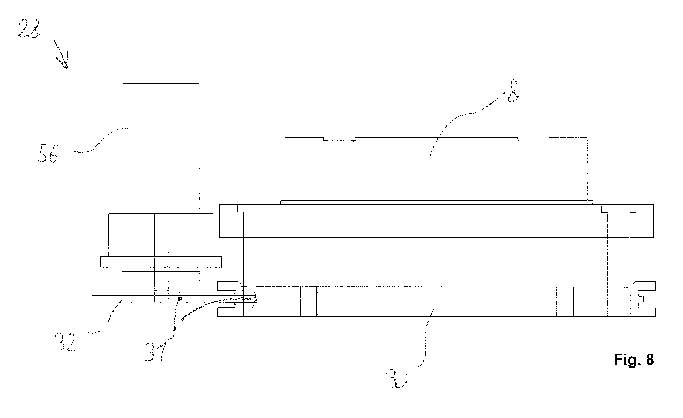

- Figur 8:: den Rotator in einer vergrößerten Ansicht; und
- Figur 9:: ein Hydraulikschaltbild.

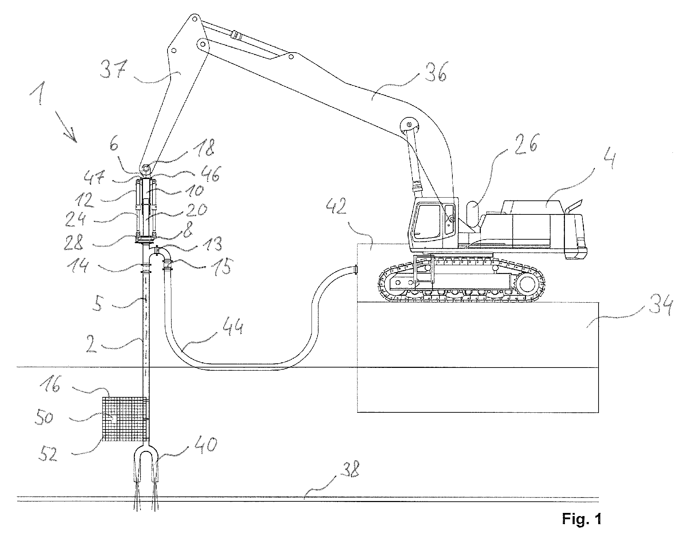

Figur 1 zeigt einen Hydraulikbagger 4 mit einer Vorrichtung 1 dient zum Einbringen eines Objektes 38, insbesondere Kabels in einen Gewässergrund in einer Gesamtansicht. Ein Hydraulikbagger 4 ist auf einem Schiff 34 oder einem anderem schwimmfähigen Gerät positioniert. Der Hydraulikbagger 4 weist einen bewegbaren ersten Arm 36, einen bewegbaren zweiten Arm 37 und eine Baggeraufnahme 18 auf. Die Baggeraufnahme 18 ist mit dem bewegbaren zweiten Arm 37 fest verbunden.

Die Vorrichtung 1 hat ein Rohr 2 mit einem Rohrende 40, eine Kopplungseinrichtung 6 mit einem Flansch 46 zum Koppeln der Vorrichtung 1 mit der Baggeraufnahme 18, eine mit dem Flansch 46 gekoppelte Führungseinrichtung 10 zum Führen des Rohres 2 und Ermöglichen einer axialen Bewegbarkeit des Rohres 2 und eine Dämpfungseinrichtung 12 zum Dämpfen einer axialen Bewegung des Rohres 2. Ferner weist die Vorrichtung 1 auf einen mit dem Rohr 2 gekoppelten Rotator 8 zum Rotieren des Rohres 2 um dessen Längsachse 5, eine Drehwinkel-Messeinrichtung 28, einen Kompensator 14 zur Ermöglichung einer axialen und/oder winkeligen Bewegung des Rohres 2 sowie eine mit dem Rohr 2 gekoppelte Sensoreinrichtung 16. Das Rohr 2 steht in der gezeigten Position senkrecht oberhalb des einzubringenden strangförmigen Objekts 38.

Mit Hilfe des bewegbaren ersten Arms 36 und des bewegbaren zweiten Arms 37 des Hydraulikbaggers 4 kann das Rohr 2 und das Rohrende 40 definiert geführt werden. So lässt sich das Rohr 2 während des Spül- oder Saugvorgangs dreidimensional zuverlässig bewegen, um ein Objekt 38 einzubringen..

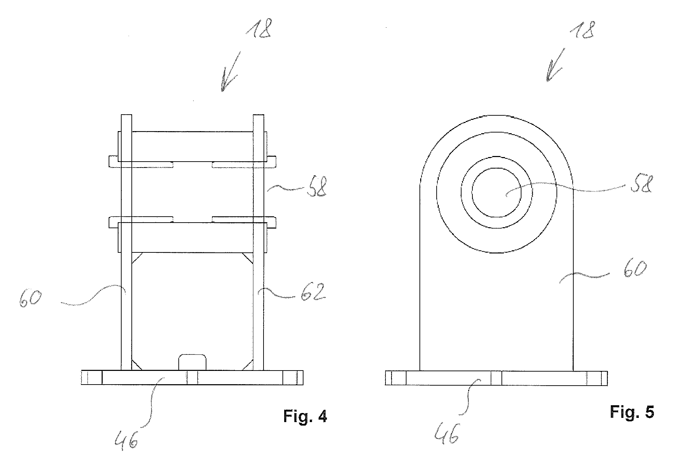

Die Baggeraufnahme 18 hat einen Flansch 46 und ist mit diesem mit einer Kopplungseinrichtung 6 der Vorrichtung 1 lösbar verbunden. Sie dient als Trägerelement der Vorrichtung 1. Die Figuren 4 und 5 zeigen vergrößert die Baggeraufnahme 18. Die Baggeraufnahme 18 weist ein erstes Blech 60 und ein zweites Blech 62, einen Flansch 46 zum Koppeln mit der Kopplungseinrichtung 6 der Führungseinrichtung 10, sowie eine Bohrung 58 zum Einführen eines Bolzens, welcher eine formschlüssige Verbindung zwischen der Bohrung 58 der Baggeraufnahme 18 und des bewegbaren zweiten Arms 37 des Hydraulikbaggers 4 bildet. Die Kopplungseinrichtung 6 der Vorrichtung 1 weist einen Flansch 47 auf, welcher mit dem Flansch 46 der Baggeraufnahme des Hydraulikbaggers 4 verschraubt ist.

Das Rohr 2, insbesondere Spül- und Saugrohr, ist mittels des Kompensators 14, einer Rohrabzweigung 13 und eines Rohrdrehgelenk 15 und eines flexiblen Schlauchs 44 mit einer Pumpe 42 verbunden zur Erzeugung eines Fluidstroms in dem Rohr 2 zum Auflockern des Gewässergrunds. Die Pumpe 42 und ein Blasenspeicher 26 können auf dem Schiff 34 oder einem anderem schwimmfähigen Gerät und ggf. an dem Hydraulikbagger 4 positioniert sein.

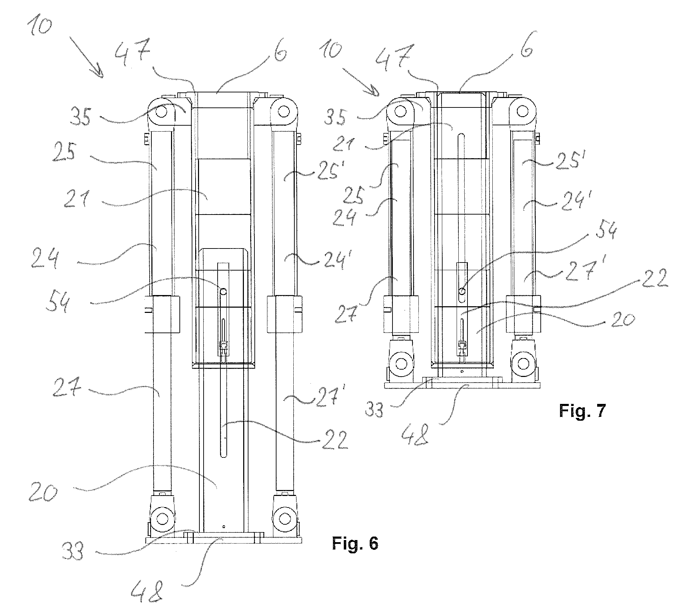

Die Führungseinrichtung 10 ist zwischen der Baggeraufnahme 18 und dem Rotator 8 angeordnet. Gemäß den Figuren 6 und 7 weist die Führungseinrichtung 10 mindestens ein mit dem Flansch 47 der Kopplungseinrichtung 6 verbundenes Führungsrohr 20 mit zwei axial verlaufenden gegenüberliegenden Schlitzen 22 sowie ein koaxial zu dem Führungsrohr 20 angeordnetes zweites Führungsrohr 21 auf. Das zweite Führungsrohr 21 weist zwei Vorsprünge 54 auf. Die Vorsprünge 54 sind in den Schlitzen 22 des ersten Führungsrohres 20 axial verschieblich. Alternativ wäre es auch möglich, dass in dem ersten Führungsrohr 20 nur ein axial verlaufender Schlitz 22 in und in dem zweiten Führungsrohr 21 ein Vorsprung 54 vorhanden ist.

Die Dämpfungseinrichtung 12 ist im Ausführungsbeispiel wenigstens teilweise ein Teil der Führungseinrichtung 10 und ist zwischen der Kopplungseinrichtung 6 und dem Rotator 8 angeordnet. Die Dämpfungseinrichtung 12 weist mindestens zwei Hydraulikzylinder 24 auf, welche parallel zur Längsachse 5 des Rohres 2 angeordnet sind. Die Dämpfungseinrichtung 12 dient zum Dämpfen einer axialen Bewegung des Rohres 2. Die Hydraulikzylinder 24 weisen jeweils einen Zylinder 25 , der mit einer mit dem ersten Führungsrohr 20 verbundenen Platte 33 verbunden ist, sowie eine Kolbenstange 27 auf, die jeweils mit einer mit dem zweiten Führungsrohr 21 verbundenen Platte 35 verbunden ist.

Die Hydraulikzylinder 24, genauer gesagt deren Zylinder 25, sind mittels nicht gezeigter Leitungen hydraulisch mit einem Blasenspeicher 26 gekoppelt. Der Blasenspeicher 26 ist mit einem Gas befüllbar, insbesondere mit einer stickstoffgefüllten Flasche verbunden und ist an dem Hydraulikbagger 4 angeordnet. Eine Kombination der Dämpfungseinrichtung 12 und der zuvor beschriebenen Führungseinrichtung 10, ermöglicht es, Beschädigungen des Objektes 38 durch das Rohr 2, beispielweise während einer Abwärtsbewegung zu vermeiden.

Der Rotators 8 ist zwischen der Führungseinrichtung 10 und einer Kettenscheibe 30 platziert. Unter einen Rotator 8 ist jede Art von Vorrichtung zu verstehen, die geeignet ist, mithilfe eines Antriebs und ggf. geeigneter Führungs- oder Lagerungseinrichtung das Rohr 2 um seine Längsachse 5 zu rotieren. Die Kettenscheibe 30 ist mittels Flanschverbindung 48 mit dem Rohr 2 gekoppelt. So kann das Rohr 2 mit Hilfe des Rotators 8 gedreht werden, um die unteren Öffnungen in unterschiedlichen Positionen verdrehen zu können, um sie optimal je nach Anwendungsfall relativ zum Objekt 38, beispielsweise einem Kabel, ausrichten zu können. Ferner ist der Rotator 8 mittels Hydraulikleitungen mit dem Hydrauliksystem des Hydraulikbaggers 4 verbindbar.

Eine Drehwinkel-Messeinrichtung 28 zur Ermittlung des Drehwinkels des Rohres 2 ist benachbart zu dem Rotator 8 angeordnet. Die Drehwinkel-Messeinrichtung 28 weist die unterhalb des Rotators 8 angeordnete Kettenscheibe 30 sowie ein mittels einer angedeuteten Kette 31 oder eines Riemens mit der Kette 31 gekoppeltes Ritzel 32 sowie einen mit dem Ritzel 32 gekoppelten Drehimpulsgeber 56 zum Bereitstellen von Signalen oder Impulsen, die ein Maß für den Drehwinkel des Rohres 2 darstellen, auf.

Der Kompensator 14 ist mittels Flanschverbindungen in das Rohr 2 integriert in einem oberen Abschnitt des Rohres 2 und weist einen elastischen Rohrabschnitt aus Kunststoff oder dgl. auf, so dass das Rohr 2 sowohl winkelig seitlich ausweichen und/oder innerhalb gewisser Grenzen axial bewegt werden kann. Diese winklige abknickende Bewegbarkeit bzw. axiale Bewegbarkeit trägt dazu bei, Beschädigungen eines Objektes 38 zu verringern.

Mithilfe der erfindungsgemäßen Sensoreinrichtung 16 können vor oder während des Betriebs verschiedene Parameter oder Messgrößen erfasst werden. Die Sensoreinrichtung 16 besitzt eine mit dem Rohr 2 verbundene Tragvorrichtung zur Befestigung des oder der Sensoren 50 zur Erfassung verschiedener Messgrößen und dienen somit zur Steuerung der Vorrichtung 1 insbesondere der Bewegung des Rohres 2 relativ zu einem Objekt 38. Die Tragvorrichtung 16 ist als ein Gitterrost aus einem nichtmagnetischen Material ausgebildet.

Das Rohrende 40 steht im Betrieb senkrecht in unmittelbarer Nähe zum Objekt 38 und ist mittels Rohrdrehgelenk 15, über den flexiblen Schlauch 44 und weiteren Leitungen mit der Pumpe 42 verbunden. Beispielsweise kann das Rohrende 40 als sogenannte Doppellanze ausgebildet und am Ende Y-förmig gegabelt oder verzweigt sein, sodass zwei Wasserstrahlen zum Spülen und Auflockern des Gewässergrundes abgegeben werden können.

Mit Hilfe des Rotators 8 kann das Rohrende 40 gedreht werden, um die unteren Öffnungen in unterschiedlichen Positionen verdrehen zu können. Somit kann das Rohrende 40 optimal je nach Anwendungsfall relativ zum Objekt 38 ausgerichtet werden. Beispielsweise kann im Falle einer Doppellanze diese so relativ zu einem strangförmigen Objekt 38 ausgerichtet werden, dass die verzweigten Rohrenden 40 jeweils seitlich zur Längsachse 5 des Objektes 38 ausgerichtet sind oder alternativ oberhalb der Längsachse 5 angeordnet sind. So lässt sich jeweils die gewünschte Spül- oder Saugwirkung einstellen.

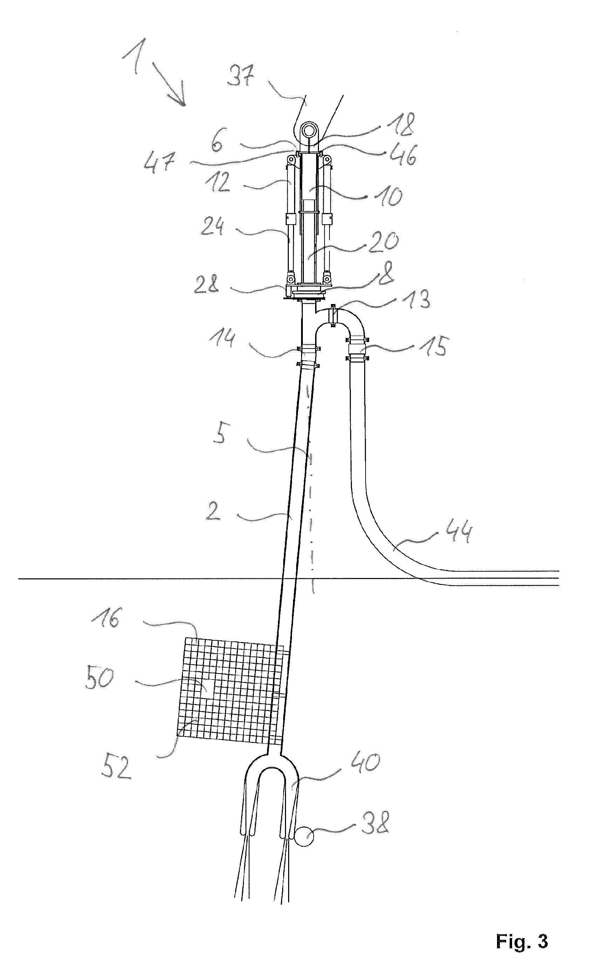

Figur 3 zeigt ein gegenüber der Längsachse 5 abgewinkelten Rohr 2 beim Einsatz des Rotators 8 und des Kompensators 14. Der wenigstens teilweise elastisch verformbare Kompensator 14 ermöglicht die winklige Bewegung des Rohres 2. Diese winklige abknickende bzw. axiale Bewegbarkeit trägt dazu bei, Beschädigungen des einzubringenden Objektes 38 zu verhindern oder mindestens zu verringern.

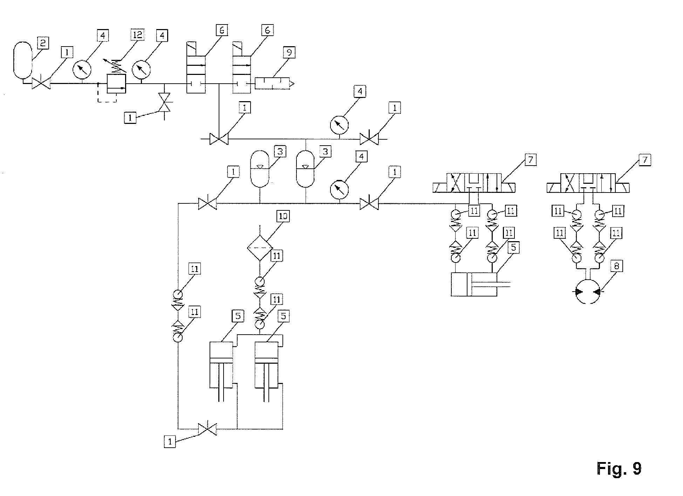

Figur 9 zeigt ein Hydraulikschaltbild mit genormten Symbolen. Hierzu gilt die nachfolgende Legende mit Zahlen, welche in Figur 9 jeweils in einem quadratischen Kasten angeordnet sind. Dem Fachmann sind die Bedeutungen der Symbole und Verbindungen der einzelnen hydraulischen Elemente geläufig, so dass es an dieser Stelle keiner genaueren Beschreibung bedarf.

### Legende:

- 1: Absperrventil
- 2: Gasflasche
- 3: Blasenspeicher
- 4: Manometer
- 5: Hydraulikzylinder, doppelwirkend
- 6: 2/3 - Wegeventil, elektrisch bestätigt
- 7: 4/3 - Wegeventil, elektrisch bestätigt
- 8: Rotator
- 9: Schalldämpfer
- 10: Filter
- 11: Rückschlagventil, federbelastet
- 12: Druckregelventil, einstellbar

### Die Erfindung wird ferner beschrieben anhand der nachfolgenden Ausführungsbeispiele, worin:

Ausführungsbeispiel1. Vorrichtung (1) zum Einbringen eines Objektes (38), insbesondere Kabels in einen Gewässergrund, mit: einem Rohr (2), insbesondere Spül- und Saugrohr, welches mit einer Pumpe (42) verbindbar ist, so dass in dem Rohr (2) ein Fluidstrom zum Auflockern des Gewässergrunds erzeugbar ist,
   gekennzeichnet durch eine mit einem Hydraulikbagger (4) lösbar verbindbare Kopplungseinrichtung (6) zum unmittelbaren oder mittelbaren Koppeln des Rohres (2) mit einem Hydraulikbagger (4).
Ausführungsbeispiel 2. Vorrichtung (1) zum Einbringen eines Objektes (38), insbesondere Kabels in einen Gewässergrund, mit den Merkmalen des Oberbegriffs des Ausführungsbeispiels 1 oder Ausführungsbeispiel 1,
   gekennzeichnet durch einen mit dem Rohr (2) gekoppelten Rotator (8) zum Rotieren des Rohres (2) um dessen Längsachse (5).
Ausführungsbeispiel 3. Vorrichtung (1) zum Einbringen eines Objektes (38), insbesondere Kabels in einen Gewässergrund, mit den Merkmalen des Oberbegriffs des Ausführungsbeispiels 1 oder Ausführungsbeispiel 2,
   gekennzeichnet durch eine mit dem Rohr (2) gekoppelte Führungseinrichtung (10) zum Führen des Rohres (2) und Ermöglichen einer axialen Bewegbarkeit des Rohres (2).
Ausführungsbeispiel 4. Vorrichtung (1) zum Einbringen eines Objektes (38), insbesondere Kabels in einen Gewässergrund, mit den Merkmalen des Oberbegriffs des Ausführungsbeispiels 1 oder der Ausführungsbeispiele 1 bis 3,
   gekennzeichnet durch eine Dämpfungseinrichtung (12) zum Dämpfen einer axialen Bewegung des Rohres (2).
Ausführungsbeispiel 5. Vorrichtung (1) zum Einbringen eines Objektes (38), insbesondere Kabels in einen Gewässergrund, mit den Merkmalen des Oberbegriffs des Ausführungsbeispiels 1 oder Ausführungsbeispiele 1 bis 4,
   gekennzeichnet durch einen mit dem Rohr (2) gekoppelten wenigstens teilweise elastisch verformbaren Kompensator (14), welcher eine axiale und/oder winklige Bewegung des Rohres (2) ermöglicht.
Ausführungsbeispiel 6. Vorrichtung (1) zum Einbringen eines Objektes (38), insbesondere Kabels in einen Gewässergrund, mit den Merkmalen des Oberbegriffs des Ausführungsbeispiels 1 oder der Ausführungsbeispiele 1 bis 5,
   gekennzeichnet durch eine mit dem Rohr (2) gekoppelte Sensoreinrichtung (16) mit mindestens einem Sensor (50) oder mehreren Sensoren (50).
Ausführungsbeispiel 7. Vorrichtung (1) nach mindestens einem der vorstehenden Ausführungsbeispiele,
   wobei die Kopplungseinrichtung (6) einen Flansch (46) aufweist, welcher mit einer Baggeraufnahme (18) eines Hydraulikbaggers (4) gekoppelt ist und mit dem Rohr (2) mittelbar oder unmittelbar verbunden ist.
Ausführungsbeispiel 8. Vorrichtung (1) mit den Merkmalen des Ausführungsbeispiels 7, wobei der Flansch (47) mit der Führungseinrichtung (10) verbunden ist.
Ausführungsbeispiel 9. Vorrichtung (1) nach mindestens einem der vorstehenden Ausführungsbeispiele,
   wobei die Führungseinrichtung (10) und/oder die Dämpfungseinrichtung (12) ein Führungsrohr (20)mit mindestens einem axial verlaufenden Schlitz (22), vorzugsweise zwei axial verlaufenden gegenüberliegenden Schlitzen (22) sowie ein koaxial zu dem Führungsrohr (20) angeordnetes zweites Führungsrohr (21) aufweist, welches mit einem Vorsprung (54) oder vorzugsweise zwei Vorsprüngen (54) versehen ist, der bzw. die in dem mindestens einen Schlitz (22) in dem ersten Führungsrohr (20) axial verschieblich ist bzw. sind.
Ausführungsbeispiel 10. Vorrichtung (1) nach mindestens einem der vorstehenden Ausführungsbeispiele 2 bis 9,
   wobei die Führungseinrichtung (10) mindestens einen, vorzugsweise zwei Hydraulikzylinder (24) aufweist, der bzw. die im Wesentlichen parallel zur Längsachse (5) des Rohres (2) angeordnet sind.
Ausführungsbeispiel 11. Vorrichtung (1) mit den Merkmalen des Ausführungsbeispiels 10,
   wobei der oder die Hydraulikzylinder (24) hydraulisch mit einem Ausgleichsbehälter, insbesondere einem Blasenspeicher (26) gekoppelt ist, welcher mit einem Gas befüllbar ist.
Ausführungsbeispiel 12. Vorrichtung (1) mit den Merkmalen des Ausführungsbeispiels 11,
   wobei der Ausgleichsbehälter an einem Hydraulikbagger (4) angeordnet ist und mittels mindestens einer mit Hydraulikflüssigkeit gefüllten Leitung mit dem oder den Hydraulikzylindern (24) hydraulisch gekoppelt ist.
Ausführungsbeispiel 13. Vorrichtung (1) mit den Merkmalen der Ausführungsbeispiele 11 oder 12,
   wobei der Ausgleichsbehälter mit einer gas-, insbesondere stickstoffgefüllten Flasche verbunden ist.
Ausführungsbeispiel14. Vorrichtung (1) nach mindestens einem der vorstehenden Ausführungsbeispiele,
   wobei der Rotator (8) einen hydraulischen Motor, insbesondere einen Axialkolbenmotor aufweist und mittels Hydraulikleitungen mit einem Hydrauliksystem, insbesondere eines Hydraulikbaggers (4) verbindbar ist.
Ausführungsbeispiel15. Vorrichtung (1) nach mindestens einem der vorstehenden Ausführungsbeispiele,
   dadurch gekennzeichnet, dass der Rotator (8) zwischen Führungseinrichtung (10) und Rohr (2) angeordnet ist.
Ausführungsbeispiel16. Vorrichtung (1) nach mindestens einem der vorstehenden Ausführungsbeispiele,
   wobei der Rotator (8) mittels Flanschverbindung (48) mit der Führungseinrichtung (10) und/oder dem Rohr (2) verbunden ist.
Ausführungsbeispiel17. Vorrichtung (1) nach mindestens einem der vorstehenden Ausführungsbeispiele,
   gekennzeichnet durch eine Drehwinkel-Messeinrichtung (28) zum Messen des Drehwinkels des Rohres (2).
Ausführungsbeispiel 18. Vorrichtung (1) mit dem Merkmal des Ausführungsbeispiels 17, wobei die Drehwinkel-Messeinrichtung (28) mit dem Rotator (8) gekoppelt ist oder in der Nähe des Rotators (8) oder benachbart zu dem Rotator (8) angeordnet ist.
Ausführungsbeispiel 19. Vorrichtung (1) mit dem Merkmal des Ausführungsbeispiels 18, wobei die Drehwinkel-Messeinrichtung (28) eine benachbart zu dem Rotator (8) angeordnete Kettenscheibe (30) sowie ein mittels einer Kette (31) oder eines Riemens mit der Kette (31) gekoppeltes Ritzel (32) sowie einen mit dem Ritzel (32) gekoppelten Drehimpulsgeber (56) zum Bereitstellen von Signalen oder Impulsen, die ein Maß für den Drehwinkel des Rohres (2) darstellen, aufweist.
Ausführungsbeispiel 20. Vorrichtung (1) nach mindestens einem der vorstehenden Ausführungsbeispiele,
   wobei die Sensoreinrichtung (16) eine mit dem Rohr (2) verbundene Tragvorrichtung (52) zur Befestigung des oder der Sensoren (50) aufweist.
Ausführungsbeispiel 21. Vorrichtung (1) mit den Merkmalen des Ausführungsbeispiels 20,
   wobei die Tragvorrichtung (52) als ein Gitterrost aus einem nichtmagnetischen Material ausgebildet ist.
Ausführungsbeispiel 22. Vorrichtung (1) nach mindestens einem der vorstehenden Ausführungsbeispiele,
   wobei die Sensoreinrichtung (16) mindestens einen der folgenden Sensortypen aufweist: Sensor zur Messung eines Magnetfeldes
   Kamera
   Wasserdruckaufnehmer
   GPS-Sensor
   Bewegungssensor
Ausführungsbeispiel 23. Vorrichtung (1) nach mindestens einem der vorstehenden Ausführungsbeispiele,
   wobei das Rohr (2) an seinem Ende verzweigt ist, insbesondere zwei beabstandete Rohrenden (40) aufweist (Doppellanze).
Ausführungsbeispiel 24. Vorrichtung (1) nach mindestens einem der vorstehenden Ausführungsbeispiele,
   wobei das Rohr (2) an einem oberen Bereich eine Abzweigung zum Einleiten bzw. Abgeben von Flüssigkeit aufweist,
   dass die Abzweigung mittels eines flexiblen Schlauches (44) mit einer Pumpe (42) verbunden ist, wobei vorzugsweise die Pumpe (42) an dem Hydraulikbagger (4) angeordnet ist
   und/oder dass zwischen Abzweigung und Schlauch ein Rohrdrehgelenk (15) angeordnet ist.
Ausführungsbeispiel 25. Vorrichtung (1) nach mindestens einem der vorstehenden Ausführungsbeispiele,
   wobei die Vorrichtung (1) mittels der Kopplungseinrichtung (6) mit einem Arm (37) eines Hydraulikbaggers (4) gekoppelt ist.
Ausführungsbeispiel 26. Hydraulikbagger (4),
   mit einem Arm (37),
   einem Hydrauliksystem und einer Pumpe (42) zum Fördern von Flüssigkeiten,
   wobei der Hydraulikbagger (4) mit einer Vorrichtung (1) nach mindestens einem der vorstehenden Ansprüche 1 bis 25 gekoppelt ist.
Ausführungsbeispiel 27. Hydraulikbagger (4) mit den Merkmalen des Ausführungsbeispiels 26,
   wobei das Rohr (2) mittels eines flexiblen Schlauches (44) mit der Pumpe (42) verbunden ist, und/oder
   der Rotator (8) mit dem Hydrauliksystem gekoppelt sind, und/oder
   der Blasenspeicher (26) des Dämpfungseinrichtung (12) an dem Hydraulikbagger (4) angeordnet ist und mittels Leitungen mit dem Dämpfungseinrichtung (12) verbunden ist.

### Bezugszeichenliste

- 1: Vorrichtung
- 2: Rohr
- 4: Hydraulikbagger
- 5: Längsachse
- 6: Kopplungseinrichtung
- 8: Rotator
- 10: Führungseinrichtung
- 12: Dämpfungseinrichtung
- 13: Rohrabzweigung
- 14: Kompensator
- 15: Rohrdrehgelenk
- 16: Sensoreinrichtung
- 18: Baggeraufnahme
- 20: Erstes Führungsrohr
- 21: Zweites Führungsrohr
- 22: Axial verlaufender Schlitz
- 24: Hydraulikzylinder
- 25: Zylinder
- 26: Blasenspeicher
- 27: Kolbenstange
- 28: Drehwinkel-Messeinrichtung
- 30: Kettenscheibe
- 31: Kette
- 32: Ritzel
- 33: Platte
- 34: Schiff
- 35: Platte
- 36: Bewegbarer erster Arm
- 37: Bewegbarer zweiter Arm
- 38: Objekt
- 40: Rohrende
- 42: Pumpe
- 44: Flexibler Schlauch
- 46: Flansch (Hydraulikbagger)
- 47: Flansch (Führungseinrichtung)
- 48: Flanschverbindung
- 50: Sensoren
- 52: Tragevorrichtung
- 54: Vorsprung
- 56: Drehimpulsgeber
- 58: Bohrung
- 60: Erstes Blech
- 62: Zweites Blech

## Patentansprüche

1. Vorrichtung (1) zum Einbringen eines Objektes (38), insbesondere Kabels in einen Gewässergrund, mit:
einem Rohr (2), insbesondere Spül- und Saugrohr, welches mit einer Pumpe (42) verbindbar ist, so dass in dem Rohr (2) ein Fluidstrom zum Auflockern des Gewässergrunds erzeugbar ist,
**gekennzeichnet durch** eine mit einem Hydraulikbagger (4) lösbar verbindbare Kopplungseinrichtung (6) zum unmittelbaren oder mittelbaren Koppeln des Rohres (2) mit einem Hydraulikbagger (4).

2. Vorrichtung (1) zum Einbringen eines Objektes (38), insbesondere Kabels in einen Gewässergrund, nach dem Oberbegriff des Anspruchs 1 oder Anspruch 1, **gekennzeichnet durch** einen mit dem Rohr (2) gekoppelten Rotator (8) zum Rotieren des Rohres (2) um dessen Längsachse (5) und/oder
eine mit dem Rohr (2) gekoppelte Führungseinrichtung (10) zum Führen des Rohres (2) und Ermöglichen einer axialen Bewegbarkeit des Rohres (2).

3. Vorrichtung (1) zum Einbringen eines Objektes (38), insbesondere Kabels in einen Gewässergrund, nach dem Oberbegriff des Anspruchs 1 oder einem der Ansprüche 1 oder 2,
**gekennzeichnet durch** eine Dämpfungseinrichtung (12) zum Dämpfen einer axialen Bewegung des Rohres (2) und/oder
einen mit dem Rohr (2) gekoppelten wenigstens teilweise elastisch verformbaren Kompensator (14), welcher eine axiale und/oder winklige Bewegung des Rohres (2) ermöglicht.

4. Vorrichtung (1) zum Einbringen eines Objektes (38), insbesondere Kabels in einen Gewässergrund, nach dem Oberbegriff des Anspruchs 1 oder einem der Ansprüche 1 bis 3,
**gekennzeichnet durch** eine mit dem Rohr (2) gekoppelte Sensoreinrichtung (16) mit mindestens einem Sensor (50) oder mehreren Sensoren (50), wobei die Sensoreinrichtung (16) vorzugsweise mindestens einen der folgenden Sensortypen aufweist:
- Sensor zur Messung eines Magnetfeldes
- Kamera
- Wasserdruckaufnehmer
- GPS-Sensor
- Bewegungssensor.

5. Vorrichtung (1) nach mindestens einem der vorstehenden Ansprüche,
**dadurch gekennzeichnet, dass** die Kopplungseinrichtung (6) einen Flansch (46) aufweist, welcher mit einer Baggeraufnahme (18) eines Hydraulikbaggers (4) gekoppelt ist und mit dem Rohr (2) mittelbar oder unmittelbar verbunden ist, wobei der Flansch (47) vorzugsweise mit der Führungseinrichtung (10) verbunden ist;
und/oder
die Vorrichtung (1) mittels der Kopplungseinrichtung (6) mit einem Arm (37) eines Hydraulikbaggers (4) gekoppelt ist.

6. Vorrichtung (1) nach mindestens einem der vorstehenden Ansprüche,
**dadurch gekennzeichnet, dass** die Führungseinrichtung (10) und/oder die Dämpfungseinrichtung (12) ein Führungsrohr (20) mit mindestens einem axial verlaufenden Schlitz (22), vorzugsweise zwei axial verlaufenden gegenüberliegenden Schlitzen (22) sowie ein koaxial zu dem Führungsrohr (20) angeordnetes zweites Führungsrohr (21) aufweist, welches mit einem Vorsprung (54) oder vorzugsweise zwei Vorsprüngen (54) versehen ist, der bzw. die in dem mindestens einen Schlitz (22) in dem ersten Führungsrohr (20) axial verschieblich ist bzw. sind.

7. Vorrichtung (1) nach mindestens einem der vorstehenden Ansprüche 2 bis 9,
**dadurch gekennzeichnet, dass** die Führungseinrichtung (10) mindestens einen, vorzugsweise zwei Hydraulikzylinder (24) aufweist, der bzw. die im Wesentlichen parallel zur Längsachse (5) des Rohres (2) angeordnet sind, wobei der oder die Hydraulikzylinder (24) vorzugsweise hydraulisch mit einem Ausgleichsbehälter, insbesondere einem Blasenspeicher (26) gekoppelt ist, welcher mit einem Gas befüllbar ist.

8. Vorrichtung (1) nach Anspruch 7,
**dadurch gekennzeichnet, dass** der Ausgleichsbehälter an einem Hydraulikbagger (4) angeordnet ist und mittels mindestens einer mit Hydraulikflüssigkeit gefüllten Leitung mit dem oder den Hydraulikzylindern (24) hydraulisch gekoppelt ist, wobei der Ausgleichsbehälter vorzugsweise mit einer gas-, insbesondere stickstoffgefüllten Flasche verbunden ist.

9. Vorrichtung (1) nach mindestens einem der vorstehenden Ansprüche,
**dadurch gekennzeichnet, dass** der Rotator (8) einen hydraulischen Motor, insbesondere einen Axialkolbenmotor aufweist und mittels Hydraulikleitungen mit einem Hydrauliksystem, insbesondere eines Hydraulikbaggers (4) verbindbar ist und/oder der Rotator (8) zwischen Führungseinrichtung (10) und Rohr (2) angeordnet ist.

10. Vorrichtung (1) nach mindestens einem der vorstehenden Ansprüche,
**dadurch gekennzeichnet, dass** der Rotator (8) mittels Flanschverbindung (48) mit der Führungseinrichtung (10) und/oder dem Rohr (2) verbunden ist.

11. Vorrichtung (1) nach mindestens einem der vorstehenden Ansprüche, **gekennzeichnet durch** eine Drehwinkel-Messeinrichtung (28) zum Messen des Drehwinkels des Rohres (2), wobei die Drehwinkel-Messeinrichtung (28) vorzugsweise mit dem Rotator (8) gekoppelt ist oder in der Nähe des Rotators (8) oder benachbart zu dem Rotator (8) angeordnet ist.

12. Vorrichtung (1) nach Anspruch 18,
**dadurch gekennzeichnet, dass** die Drehwinkel-Messeinrichtung (28) eine benachbart zu dem Rotator (8) angeordnete Kettenscheibe (30) sowie ein mittels einer Kette (31) oder eines Riemens mit der Kette (31) gekoppeltes Ritzel (32) sowie einen mit dem Ritzel (32) gekoppelten Drehimpulsgeber (56) zum Bereitstellen von Signalen oder Impulsen, die ein Maß für den Drehwinkel des Rohres (2) darstellen, aufweist.

13. Vorrichtung (1) nach mindestens einem der vorstehenden Ansprüche,
**dadurch gekennzeichnet, dass** die Sensoreinrichtung (16) eine mit dem Rohr (2) verbundene Tragvorrichtung (52) zur Befestigung des oder der Sensoren (50) aufweist, wobei die Tragvorrichtung (52) vorzugsweise als ein Gitterrost aus einem nichtmagnetischen Material ausgebildet ist.

14. Vorrichtung (1) nach mindestens einem der vorstehenden Ansprüche,
**dadurch gekennzeichnet, dass** das Rohr (2) an seinem Ende verzweigt ist, insbesondere zwei beabstandete Rohrenden (40) aufweist (Doppellanze) und/oder das Rohr (2) an einem oberen Bereich eine Abzweigung zum Einleiten bzw. Abgeben von Flüssigkeit aufweist,
dass die Abzweigung mittels eines flexiblen Schlauches (44) mit einer Pumpe (42) verbunden ist, wobei vorzugsweise die Pumpe (42) an dem Hydraulikbagger (4) angeordnet ist
und/oder dass zwischen Abzweigung und Schlauch ein Rohrdrehgelenk (15) angeordnet ist.

15. Hydraulikbagger (4),
mit einem Arm (37),
einem Hydrauliksystem und einer Pumpe (42) zum Fördern von Flüssigkeiten,
**dadurch gekennzeichnet, dass** der Hydraulikbagger (4) mit einer Vorrichtung (1) nach mindestens einem der vorstehenden Ansprüche 1 bis 15 gekoppelt ist, wobei das Rohr (2) vorzugsweise mittels eines flexiblen Schlauches (44) mit der Pumpe (42) verbunden ist, und/oder
der Rotator (8) vorzugsweise mit dem Hydrauliksystem gekoppelt ist, und/oder der Blasenspeicher (26) des Dämpfungseinrichtung (12) vorzugsweise an dem Hydraulikbagger (4) angeordnet ist und mittels Leitungen mit dem Dämpfungseinrichtung (12) verbunden ist.
